# EUROPÄISCHE PATENTANMELDUNG

(11) **EP 2 724 844 A1**
(43) Veröffentlichungstag der Anmeldung: **30.04.2014**
(21) Anmeldenummer: 13179907.4
(22) Anmeldetag: 09.08.2013
(51) Int. Cl.: B29C 67/00, B28B 1/00

(54) **Vorrichtung zum schichtweisen Herstellen eines Formkörpers**

(30) Priorität: 25.10.2012 DE 102012219534
(71) Anmelder: Tools and Technologies GmbH, 95173 Schönwald (DE)
(72) Erfinder: Vogel, Norbert, 95168 Marktleuthen (DE); Siller, Josef, 95694 Mehlmeisel (DE)
(74) Vertreter: Herzog, Markus

(57) **Zusammenfassung**

Vorrichtung (10) zum schichtweisen Herstellen eines Formkörpers aus einer Mehrzahl von Keramikschlickerschichten, umfassend: eine Auftragsflächenbaugruppe (20), die ein Auftragsflächenelement (22) mit einer Auftragsfläche (24) aufweist, eine Keramikschlickerauftragsbaugruppe (30) mit einer Keramikschlickerabgabeeinheit (34) und einer Rakeleinheit (32), wobei die Rakeleinheit (32) in einer zur Auftragsfläche (24) im Wesentlichen parallel verlaufenden Richtung verlagerbar ist und wobei die Keramikschlickerabgabeeinheit (34) dazu ausgebildet ist, in Verlagerungsrichtung der Rakeleinheit (32) vor die Rakeleinheit eine vorbestimmte Menge an Keramikschlicker auf die Auftragsfläche (24) aufzubringen, wobei die Vorrichtung ferner eine Startflächenbaugruppe (40) umfasst, die ein Startflächenelement (42) mit einer Startfläche (44) aufweist, wobei das Startflächenelement (42) und das Auftragsflächenelement (22) relativ zueinander verlagerbar sind, wobei die Rakeleinheit (32) in ihrer Anfangsstellung über der Startfläche (44) angeordnet ist, und wobei die Keramikschlickerabgabeeinheit (34)derart ausgebildet ist, dass sie zumindest einen Teil der vorbestimmten Menge an Keramikschlicker auf die Startfläche (44) aufbringt.

## Beschreibung

Die Erfindung betrifft eine Vorrichtung zum schichtweisen Herstellen eines Formkörpers aus einer Mehrzahl von Keramikschlickerschichten, umfassend eine Auftragsflächenbaugruppe, die ein Auftragsflächenelement mit einer Auftragsfläche aufweist, eine Keramikschlickerauftragsbaugruppe mit einer Keramikschlickerabgabeeinheit und einer Rakeleinheit, wobei die Rakeleinheit in einer zur Auftragsfläche im Wesentlichen parallel verlaufenden Richtung aus einer Anfangsstellung in eine Endstellung verlagerbar ist und wobei die Keramikschlickerabgabeeinheit dazu ausgebildet ist, in Verlagerungsrichtung der Rakeleinheit vor die Rakeleinheit eine vorbestimmte Menge an Keramikschlicker auf die Auftragsfläche aufzubringen, welche vorbestimmte Menge an Keramikschlicker zur Bildung einer Keramikschlickerschicht im Zuge der Verlagerung der Rakeleinheit aus der Anfangsstellung in die Endstellung bestimmt ist, und wobei die Rakeleinheit ferner aus der Endstellung in die Anfangsstellung rückführbar ist.

In den letzten Jahren wurde das Rapid-Prototyping von Keramik mittels LSD (Lagenweise Schlicker-Deposition)-basiertem Lasersintern entwickelt. Bei diesen Verfahren werden die einzelnen zu sinternden Schichten als Keramikschlickerschichten auf eine Auftragsfläche aufgebracht, wobei jede Keramikschlickerschicht vor dem Aufbringen der nächstfolgenden Keramikschlickerschicht in bestimmten Flächenabschnitten entsprechend vorbestimmten Daten, insbesondere CAD-Daten, mittels eines in Abhängigkeit dieser Daten geführten Laserstrahls gesintert wird. Auf diese Weise können Sinterkeramik-Formkörper Schicht für Schicht aufgebaut werden.

Eine Vorrichtung zum Durchführen eines derartigen Verfahrens ist bereits aus der gattungsbildenden DE 101 28 664 A1 bekannt. Die bekannte Vorrichtung umfasst eine Auftragsfläche, auf der eine vorbestimmte Menge an Keramikschlickermaterial abgegeben wird. Eine Rakeleinheit wird aus einer Anfangsstellung in eine Endstellung über die Auftragsfläche bewegt, um die Keramikschlickermenge über die Auftragsfläche zu verteilen, wodurch eine dünne Keramikschlickerschicht gebildet wird. Anschließend wird die Rakeleinheit zur Vorbereitung des Auftrags der nächsten Schicht aus der Endstellung wieder in die Anfangsstellung zurückgeführt.

Beim Auftragen der Schlickerschichten kann es bei der aus der DE 101 28 664 A1 bekannten Vorrichtung allerdings vorkommen, dass die Feuchtigkeit des Schlickermaterials, das zur Bildung der weiteren Schlickerschicht auf die zuletzt aufgetragene Schlickerschicht aufgebracht wird, zu schnell aufgesogen wird, so dass der aufgebrachte Schlicker zu schnell antrocknet und zumindest teilweise eine grobkörnige Konsistenz erhält. Diese angetrockneten Schlickerteile können sich in dem von der Rakeleinheit bereitgestellten Spalt festsetzen und bei der Verlagerung der Rakeleinheit in Richtung der Endstellung zur Bildung von Riefen in der aufgetragenen Schlickerschicht führen. Die Folge sind Fehler im Schichtaufbau und damit im hergestellten Formkörper.

Es ist daher Aufgabe der vorliegenden Erfindung, die Vorrichtung der eingangs genannten Art derart weiterzubilden, dass mit ihr Formkörper besserer Qualität hergestellt werden können.

Diese Aufgabe wird erfindungsgemäß durch eine Vorrichtung der eingangs genannten Art gelöst, bei welcher ferner eine Startflächenbaugruppe vorgesehen ist, die ein Startflächenelement mit einer Startfläche aufweist, wobei das Startflächenelement und das Auftragsflächenelement relativ zueinander verlagerbar sind, wobei die Rakeleinheit in ihrer Anfangsstellung über der Startfläche angeordnet ist, und wobei die Keramikschlickerabgabeeinheit derart ausgebildet ist, dass sie zumindest einen Teil der vorbestimmten Menge an Keramikschlicker auf die Startfläche aufbringt. Durch Bereitstellen einer solchen Startflächenbaugruppe und Abgabe einer Anfangsmenge an Keramikschlicker auf die zugehörige Startfläche kann der Beschlickerungsvorgang auf der Startfläche beginnen und braucht nicht auf der Auftragsfläche oder den gegebenenfalls bereits aufgetragenen Keramikschlickerschichten begonnen zu werden. Dadurch kann verhindert werden, dass dem Keramikschlicker Feuchtigkeit entzogen wird und dieser dadurch zu schnell trocknet, wodurch die Bildung von grobkörnigen Schlickeranteilen reduziert oder sogar vollständig vermieden werden kann. Als Folge hiervon weisen die Keramikschlickerschichten einen homogeneren Aufbau auf. Dies ist nicht nur beim Lasersintern von Vorteil, bei dem Formkörper höherer Homogenität und somit besserer Qualität hergestellt werden können, sondern auch bei der Herstellung von Grünkörpern, d.h. Körpern aus getrocknetem und ungebranntem Keramikmaterial.

Zu Beginn des Auftragens einer Schlickerschicht sind das Startflächenelement und das Auftragsflächenelement vorzugsweise derart angeordnet, dass die Flächennormalen der Startfläche und der Auftragsfläche zueinander im Wesentlichen parallel verlaufen. Das Startflächenelement und das Auftragsflächenelement sind relativ zueinander beispielsweise mittels Stellaggregaten verlagerbar. Dabei kann die relative Verlagerung beispielsweise in Richtung der Flächennormalen erfolgen. Die Verlagerung kann auch durch Schwenken des Startflächenelements relativ zu dem Auftragsflächenelement realisiert werden. Eine Kombination einer Verlagerung in Richtung der Flächennormalen mit einer Schwenkbewegung des Startflächenelements ist auch möglich.

Gemäß einer Weiterbildungsvariante kann der Startflächenbaugruppe eine Reinigungsvorrichtung zum Reinigen der Startfläche zugeordnet sein. Durch eine derartige Reinigungsvorrichtung können vor dem Auftragen der nächsten Schlickerschicht Schlickerrückstände von der Startfläche entfernt werden, so dass für jede Schlickerschicht die gleichen Anfangsbedingungen bereitgestellt werden können. Insbesondere kann durch den Einsatz der Reinigungsvorrichtung vermieden werden, dass auf der Startfläche etwaig angetrockneter Schlicker verbleibt, der entweder von der Rakeleinheit mitgenommen werden und zur Riefenbildung führen oder dem neu aufgebrachten Schlicker Feuchtigkeit entziehen könnte.

Grundsätzlich kann das Startflächenelement eine geschlossene Oberfläche aufweisen, die beispielsweise mittels einer Bürste, eines Schwamms oder dergleichen gereinigt werden kann. In Weiterbildung der Erfindung wird jedoch vorgeschlagen, dass das Startflächenelement zumindest abschnittsweise, vorzugsweise in einem die Startfläche aufweisenden Abschnitt, aus einem offenporigen Material gefertigt ist, beispielsweise aus einem offenporigen Kunststoff. Ein für den erfindungsgemäßen Einsatz geeignetes offenporiges Material kann beispielsweise von Firma Tools and Technologies GmbH unter der Handelsbezeichnung TT 85 bezogen werden. Diese Ausgestaltung hat den Vorteil, dass die Reinigung in einfacher Weise dadurch erfolgen kann, dass man das offenporige Material mit einem Reinigungsmedium, beispielsweise Wasser, durchspült, das den auf der Startfläche vorhandenen Schlicker von dieser löst und wegschwemmt. Das Reinigungsmedium kann dem offenporigen Material beispielsweise durch eine Reinigungsmediumszufuhrleitung zugeführt werden. Ferner kann das den Schlicker wegschwemmende Reinigungsmedium aufgefangen, aufbereitet, beispielsweise gefiltert, und erneut zur Reinigung verwendet werden. Schließlich kann der Reinigungsvorgang zusätzlich durch eine Bürste, einen Schwamm oder dergleichen unterstützt werden. Das offenporige Material kann auch nach dem Reinigen mit Luft beaufschlagt werden, so dass das angesaugte Wasser ausgeblasen wird. Dadurch wird das Material trockener und saugt durch Kapillarwirkung bei erneutem Schlickerauftrag Wasser an, wodurch die Haftung erhöht wird.

Die Größenverteilung der Poren des offenporigen Materials kann vorteilhafterweise in Anpassung an die Korngrößenverteilung des Schlickers gewählt werden. Die Porengröße sollte so gewählt werde, dass die Poren nicht durch das Schlickermaterial zugesetzt werden. Andererseits sollten die Poren nicht zu klein sein, damit noch eine ausreichende Haftung des Schlickers an dem Material gegeben ist. Bei konventionellem Porzellanschlicker beträgt die Porengröße etwa 20 bis 50 µm.

Ferner kann es vorteilhaft sein, wenn die Möglichkeit der Relativverlagerung von Startflächenelement und Auftragsflächenelement im Rahmen der Reinigung der Startfläche dazu genutzt wird, um die Startfläche zur Reinigung relativ zur Auftragsfläche abzusenken. Hierdurch kann insbesondere verhindert werden, dass der Reinigungsvorgang die bereits aufgetragenen Schlickerschichten beeinträchtigt bzw. beschädigt.

In Weiterbildung der Erfindung kann ferner eine weitere Reinigungsvorrichtung zum Reinigen der Rakeleinheit vorgesehen sein. Diese weitere Reinigungsvorrichtung kann vor dem Auftragen der nachfolgenden Schlickerschicht etwaig an der Rakeleinheit anhaftende Schlickerrückstände von dieser entfernen, um auch an der Rakeleinheit anhaftendes Schlickermaterial als mögliche Quelle von Verunreinigungen, die zur Riefenbildung führt, ausschließen zu können. Um verhindern zu können, dass die bereits aufgetragenen Schlickerschichten bei der Reinigung der Rakeleinheit beeinträchtigt bzw. beschädigt werden, kann ferner vorgesehen sein, dass die Rakeleinheit im Zuge der Rückführung von der Endstellung in die Anfangsstellung in eine Reinigungsstellung überführbar ist, die vorzugsweise unterhalb der Endstellung angeordnet sein kann.

Um einen möglichst glatten Übertritt der Rakeleinheit von der Startfläche zur Auftragsfläche ermöglichen zu können, wird vorgeschlagen, dass das Startflächenelement und das Auftragsflächenelement derart anordenbar sind, dass die Auftragsfläche und die Startfläche zu Beginn der Herstellung eines Keramikkörpers im Wesentlichen auf gleicher Höhe angeordnet sind.

Um dem zu fertigenden Formkörper eine formschönere Kontur verleihen zu können, kann vorteilhaft sein, dass ferner eine Auslaufflächenbaugruppe vorgesehen ist, die ein Auslaufflächenelement mit einer Auslauffläche aufweist und auf der dem Startflächenelement abgewandten Seite des Auftragsflächenelements angeordnet ist, wobei die Rakeleinheit in ihrer Endstellung über der Auslauffläche angeordnet ist, oder/und wenigstens eine Seitenflächenbaugruppe vorgesehen ist, die ein Seitenflächenelement mit einer Seitenfläche aufweist und seitlich der Auftragsflächenbaugruppe angeordnet ist.

Vorzugsweise sind die Auslauffläche oder/und und die mindestens eine Seitenfläche zur Auftragsfläche derart angeordnet, dass deren Flächennormalen im Wesentlichen parallel verlaufen. Dies ermöglicht eine genauere Ansteuerung der jeweiligen Flächen, da kein Ausgleich einer gegebenenfalls unterschiedlichen Neigung der Flächen erforderlich ist, um diese in Anlage miteinander zu bringen.

Um eine möglichst gleichmäßige Verlagerung der Rakeleinheit über die Auslauffläche oder/und die Seitenfläche ermöglichen zu können, wird vorgeschlagen, dass das Auslaufflächenelement oder/und das Seitenflächenelement derart anordenbar sind, dass die Auslauffläche oder/und die Seitenfläche zu Beginn der Herstellung eines Keramikkörpers mit der Auftragsfläche und der Startfläche auf gleicher Höhe angeordnet sind. Dadurch wird eine glatte Überführung der Rakeleinheit aus der Anfangsstellung in die Endstellung ermöglicht, wodurch eine glatte Kontur der aufgetragenen Keramikschlickerschicht realisiert werden kann. Der Einsatz der Auslauffläche oder/ und der mindestens einer Seitenfläche eignet sich insbesondere für die Herstellung von Grünkörpern mit einer glatten Kontur.

Vorzugsweise können das Auslaufflächenelement und das Seitenflächenelement relativ zum Auftragsflächenelement gemeinsam verlagerbar sein, was die Ansteuerung der hierfür erforderlichen Stellaggregate erleichtert. Grundsätzlich ist es jedoch auch denkbar, sie unabhängig voneinander verlagerbar auszubilden. Auch hier kann vorgesehen sein, dass die Verlagerung des Auslaufflächenelements und des Seitenflächenelements relativ zum Auftragsflächenelement in Richtung der Flächennormalen erfolgt oder durch eine Schwenkbewegung des Auslaufflächenelements oder/und des Seitenflächenelements relativ zum Auftragsflächenelement erfolgt. Eine Kombination einer Verlagerung in Richtung der Flächennormalen mit einer Schwenkbewegung ist auch möglich.

Um vor dem Auftragen der nächsten Schlickerschicht Schlickerrückstände von der Auslauffläche oder/und Seitenfläche entfernen zu können, wird in einer Weiterbildung der Erfindung vorgeschlagen, dass der Auslaufflächenbaugruppe oder/und der Seitenflächenbaugruppe eine Reinigungsvorrichtung zum Reinigen der Auslauffläche oder/und der Seitenfläche zugeordnet ist.

Um Keramiksinterkörper herstellen zu können, wird in Weiterbildung der Erfindung vorgeschlagen, dass ferner eine Lasereinheit vorgesehen ist, welche dazu ausgebildet ist, vorbestimmte Bereiche einer aufgetragenen Keramikschlickerschicht mittels von ihr abgegebener Laserstrahlung zu sintern.

Erforderlichenfalls kann ferner eine Trocknungsvorrichtung zum Trocknen einer aufgetragenen Keramikschlickerschicht vorgesehen sein. Beispielsweise kann die Trocknungsvorrichtung in das Auftragsflächenelement integriert sein. Vorzugsweise kann die Trocknung durch ein Aufheizen der Auftragsfläche bewerkstelligt werden.

In Weiterbildung der Erfindung kann ferner eine Steuereinheit vorgesehen sein zur Steuerung des Betriebs der Auftragsflächenbaugruppe oder/und der Startflächenbaugruppe oder/und der Auslaufflächenbaugruppe oder/und der Seitenflächenbaugruppe oder/und der Schlickerauftragsbaugruppe oder/und der Reinigungsvorrichtung oder/und der weiteren Reinigungsvorrichtung oder/und der Lasereinheit oder/und der Trocknungsvorrichtung.

Vorzugsweise kann die Steuereinheit die Auftragsflächenbaugruppe derart steuern, dass das Auftragsflächenelement nach dem Auftragen einer Keramikschlickerschicht um die Dicke der aufgetragenen Keramikschlickerschicht absenkbar ist. Dies ermöglicht es, den Formkörper auf dem Auftragsflächenelement sukzessiv aufzubauen.

Vorzugsweise kann die Steuereinheit ferner den Betrieb der Keramikschlickerabgabeeinheit steuern, um die Menge an Keramikschlicker festzulegen, die auf die Startfläche aufzubringen ist. So kann beispielsweise die gesamte vorbestimmte Menge an Keramikschlicker zu Beginn eines Auftragungsschritts auf die Startfläche abgegeben werden, und diese Menge anschließend durch die Verlagerung der Rakeleinheit aus der Anfangsstellung in die Endstellung über die Auftragsfläche verteilt werden, um eine Keramikschlickerschicht zu bilden. Alternativ kann nur ein Teil der vorbestimmten Menge an Keramikschlicker auf die Startfläche abgegeben werden, wobei der restliche Teil des Keramikschlickers dann während der Verlagerung der Rakeleinheit aus der Anfangsstellung in die Endstellung kontinuierlich abgegeben wird. Letzteres eignet sich insbesondere für längere Auftragsflächen.

Gemäß einem zweiten Aspekt betrifft die Erfindung eine Startflächenbaugruppe mit wenigstens einem der Startflächenbaugruppemerkmale der erfindungsgemäßen Vorrichtung zum schichtweisen Herstellen eines Formkörpers aus einer Mehrzahl von Keramikschlickerschichten.

Als Keramikschlicker eignet sich insbesondere eine Suspension von Aluminiumoxid (Al₂O₃), Porzellanpulver, hochreiner Kieselsäure, Aluminiumnitrid (AIN), Silizium (Si) und Siliziumnitrid (Si₃N₄). Wenn die Suspension eine wässrige Suspension ist, ermöglicht dies eine leichte und schnelle Reinigung der Startfläche unter Verwendung von Wasser.

Das Startflächenelement kann integral mit der Startflächenbaugruppe ausgebildet sein. Alternativ kann das Startflächenelement an der Startflächenbaugruppe lösbar befestigt sein. Im letzteren Fall kann jeweils ein auf die Eigenschaften des jeweils aufzutragenden Schlickermaterials angepasstes Startflächenelement verwendet werden.

Nachzutragen ist schließlich auch noch, dass nicht alle Keramikschlickerschichten aus dem gleichen Schlickermaterial gefertigt sein müssen. Vielmehr ist es auch denkbar, die Zusammensetzung des Schlickermaterials von Schicht zu Schicht oder auch nur in wenigstens einer vorbestimmten Schicht zu ändern, um einen Formkörper mit speziellen Eigenschaften herstellen zu können. Durch die Kombination unterschiedlicher Materialien können mechanische Eigenschaften, wie Streckgrenze, Bruchdehnung, Elastizitätsmodul etc. oder elektrische Eigenschaften, wie elektrischer Widerstand, Dielektrizitätskonstante, Supraleitung etc. beeinflusst werden.

Die Erfindung wird im Folgenden anhand der beigefügten Zeichnungen an Ausführungsbeispielen näher erläutert werden. Es stellt dar:
- Fig. 1: eine schematische Ansicht einer erfindungsgemäßen Vorrichtung zum schichtweisen Herstellen eines Formkörpers, wobei die Rakeleinheit in ihrer Anfangsstellung über der Startfläche angeordnet ist;
- Fig. 2: eine schematische Ansicht einer erfindungsgemäßen Vorrichtung mit abgesenktem Auftragsflächenelement;
- Fig. 3: eine schematische Ansicht einer erfindungsgemäßen Vorrichtung mit der Startflächenbaugruppe in der Reinigungsstellung;
- Fig. 4: eine schematische Ansicht einer erfindungsgemäßen Vorrichtung mit der Rakeleinheit in der Reinigungsstellung.

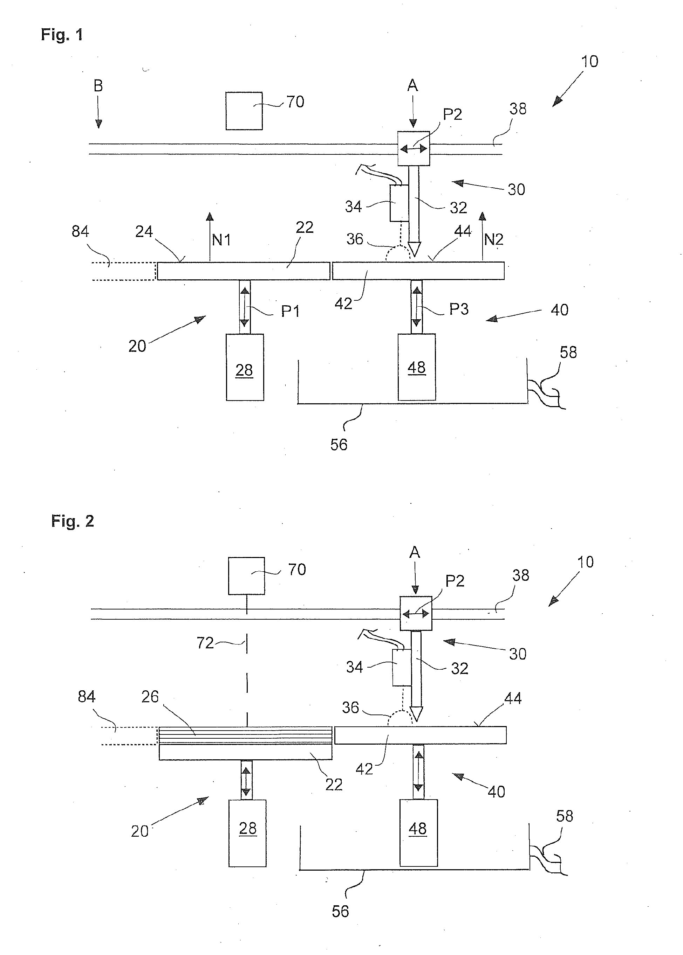

Figur 1 ist eine schematische Ansicht einer erfindungsgemäßen Vorrichtung zur Herstellung eines Formkörpers aus einer Mehrzahl von Keramikschlickerschichten. Die Vorrichtung 10 umfasst eine Auftragsflächenbaugruppe 20, eine Startflächenbaugruppe 40 und eine Keramikschlickerauftragsbaugruppe 30. Die Auftragsflächenbaugruppe 20 weist ein Auftragsflächenelement 22 mit einer Auftragsfläche 24 auf. Die Startflächenbaugruppe 40 weist ein Startflächenelement 42 mit einer Startfläche 44 auf. Die Auftragsfläche 24 und die Startfläche 44 sind derart angeordnet, dass ihre Flächennormalen N1 und N2 zueinander im Wesentlichen parallel verlaufen. Das Auftragsflächenelement 22 und das Startflächenelement 42 sind in Richtung der Flächennormalen (wie durch die Doppelpfeile P1 und P3 angezeigt) relativ zueinander mittels Stellaggregaten 28 und 48 verlagerbar. In Figur 2 ist die Vorrichtung aus Figur 1 mit relativ zum Startflächenelement 42 abgesenktem Auftragsflächenelement 22 dargestellt.

Die Keramikschlickerauftragsbaugruppe 30 umfasst eine Rakeleinheit 32 und eine Keramikschlickerabgabeeinheit 34. Die Rakeleinheit 32 ist zusammen mit der Keramikschlickerabgabeeinheit 34 an einer zur Ebene der Auftragsfläche 24 und Startfläche 44 im Wesentlichen parallel verlaufenden Führungsschiene 38 angeordnet. Über diese Führungsschiene 38 kann die gesamte Keramikschlickerauftragsbaugruppe 30 in einer in Figur 1 durch den Doppelpfeil P2 verlaufenden Richtung verlagert werden. Eine solche Verlagerung bewirkt, dass die Rakeleinheit 32 aus der in Fig. 1 gezeigten Anfangsstellung A in eine Endstellung B verlagert wird, wodurch der auf die Startfläche 44 abgegebene Keramikschlicker 36 gleichmäßig über die Startfläche 44 und die Auftragsfläche 24 verteilt wird, so dass eine Keramikschlickerschicht 26 (Fig. 2) gebildet wird.

Die aufgetragene Keramikschlickerschicht 26 kann erforderlichenfalls unter Verwendung einer Trocknungsvorrichtung (nicht gezeigt) getrocknet werden. Anschließend wird eine Lasereinheit 70 bzw. der von einer Lasereinheit 70 abgegebene Laserstrahl 72 über die Oberfläche der aufgetragenen Keramikschlickerschicht bewegt, so dass vorbestimmte Bereiche der aufgetragenen Keramikschlickerschicht mittels des Laserstrahls 72 gesintert werden.

Nach Abschluss des Sinterprozesses wird erneut eine Menge an Keramikschlicker 36 auf die Startfläche vor der Rakeleinheit 32 abgegeben und durch die Rakeleinheit 32 im Zuge der Verlagerung aus der Anfangsstellung A in die Endstellung B über die Startfläche 44 und die Auftragsfläche 24 verteilt, um die nächste Keramikschlickerschicht 26 zu bilden. Dabei wird das Auftragsflächenelement 22 nach jedem Auftragungsschritt durch das Stellaggregat 28 um die Höhe der zuvor aufgetragenen Keramikschlickerschicht 26 abgesenkt. Dadurch wird sichergestellt, dass zu Beginn des nächsten Auftragungsschritts die neue Auftragungsfläche mit der Startfläche 44 auf gleicher Höhe liegt, wodurch ein glatter Übertritt der Rakeleinheit 32 von der Startfläche 44 zur Auftragsfläche 24 ermöglicht wird.

Figur 2 zeigt die Vorrichtung 10 in einem Zustand, in dem bereits mehrere Keramikschlickerschichten 26 aufgetragen worden sind und das Auftragsflächenelement 22 durch das Stellaggregat 28 dementsprechend abgesenkt wurde.

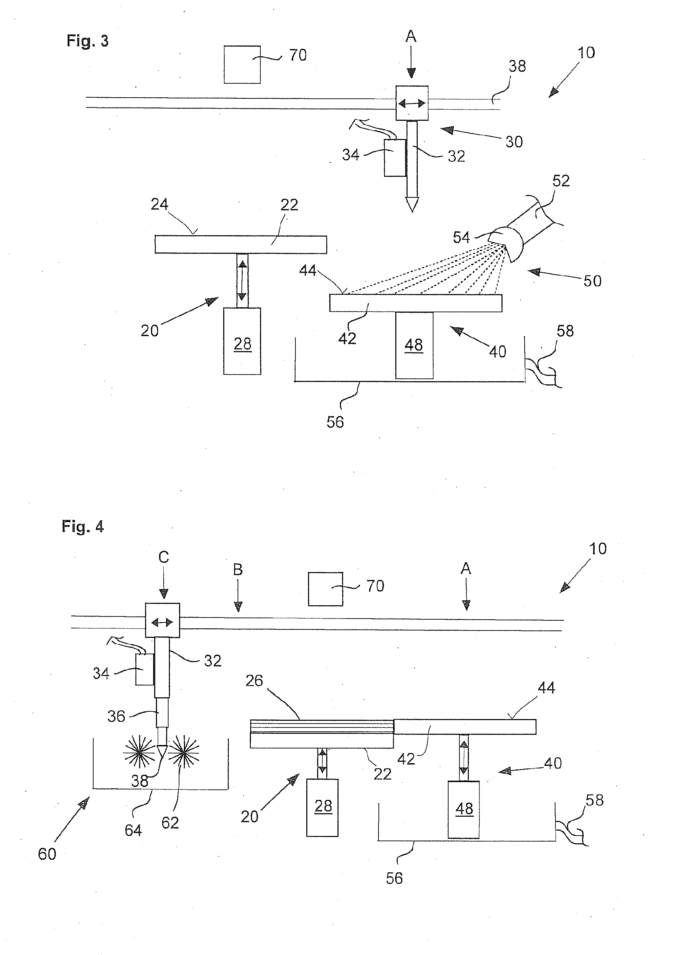

Vorzugsweise wird nach jedem Auftragungsschritt die Startfläche 44 gereinigt. Dafür ist als Teil der erfindungsgemäßen Vorrichtung 10, wie in Figur 3 dargestellt, eine Reinigungsvorrichtung 50 vorgesehen. Die Reinigungsvorrichtung 50 umfasst eine Zufuhrleitung 52 für ein Reinigungsmedium, wie beispielsweise Wasser, sowie eine Düse 54, mittels welcher das Reinigungsmedium über die Startfläche 44 verteilt wird. Das Reinigungsmedium, das den überschüssigen Keramikschlicker mitführt, welcher von der Startfläche 44 weggeschwemmt wurde, kann in einer Wanne 56 aufgefangen werden, gefiltert und über eine Rückführleitung 58 erneut zur Reinigung verwendet werden. Um eine bessere Reinigung zu ermöglichen, können zusätzliche mechanische Elemente, wie beispielsweise Bürsten oder Schwämme (nicht gezeigt), vorgesehen werden. Um zu verhindern, dass während des Reinigungsvorgangs die bereits aufgetragenen Keramikschlickerschichten 26 beeinträchtigt bzw. beschädigt werden, kann das Startflächenelement 42 gemeinsam mit der Startfläche 44 während des Reinigungsvorgangs relativ zur Auftragsfläche 24 durch das Stellaggregat 48 abgesenkt werden.

Figur 4 zeigt eine Weiterbildung der Erfindung, bei der eine weitere Reinigungsvorrichtung 60 zum Reinigen der Rakeleinheit 32 vorgesehen ist. Die Reinigungsvorrichtung 60 dient dazu, die Keramikschlickerrückstände, die nach einem Auftragungsschritt an der Rakeleinheit 32 anhaften können, vor dem Auftragen der nachfolgenden Keramikschlickerschicht zu entfernen. Die Reinigung der Rakeleinheit 32 kann beispielsweise mittels rotierenden Bürsten 62 unter Verwendung eines Reinigungsmediums, wie beispielsweise Wasser, erfolgen. Auch hier kann eine Wanne 64 vorgesehen sein, um das Reinigungsmedium sowie die Keramikschlickerrückstände aufzufangen. Und auch hier kann eine Wiederverwendung des aufgefangenen und gefilterten Reinigungsmediums vorgesehen sein.

In der in Figur 4 gezeigten Darstellung umfasst die Rakeleinheit 32 einen Teleskoparm 36, an welchem die Rakel 38 befestigt ist. In der Reinigungsstellung kann die Rakeleinheit 32 mittels des Teleskoparms 36 herabgelassen werden, um die Rakel 38 zwischen den Reinigungsbürsten 62 zu positionieren.

Während der Reinigung der Rakeleinheit 32 befindet sich die Keramikschlickerauftragsbaugruppe 30 in der Reinigungsstellung C. Die Position der Reinigungsstellung C ist von der Endstellung B der Rakeleinheit 32 entfernt, um verhindern zu können, dass die bereits aufgetragenen Keramikschlickerschichten bei der Reinigung der Rakeleinheit beeinträchtigt bzw. beschädigt werden. Andere Anordnungen der Reinigungsvorrichtung 60 sind jedoch auch möglich. Anstelle des Überführens der Rakeleinheit 32 in die Reinigungsposition und Herablassens der Rakel 38 in die Reinigungsvorrichtung 60, kann beispielsweise die Reinigung der Rakeleinheit 32 in der Anfangsstellung der Rakeleinheit A erfolgen. Denkbar wäre auch die Reinigung der Rakeleinheit 32 gleichzeitig mit der Reinigung der Startfläche 44 durchzuführen.

In Figur 1 wird durch gestrichelte Linien ferner eine Auslauffläche 84 einer Auslaufflächenbaugruppe gezeigt. Die Auslauffläche 84 befindet sich auf der dem Startflächenelement 42 abgewandten Seite des Auftragsflächenelements 22.

Ferner kann eine Steuereinheit (nicht gezeigt) vorgesehen sein, um den Betrieb der Komponenten der in den Figuren 1 bis 4 dargestellten Vorrichtung 10 zu steuern. Beispielsweise erfolgt die Steuerung derart, dass die Rakeleinheit 32 entlang der Führungslinie 38 aus der Anfangsstellung A in die Endstellung B und weiter in die Reinigungsstellung C bewegbar ist. Die Steuereinheit dient auch dazu, das Stellaggregat 28 anzusteuern, um das Auftragsflächenelement 22 nach jedem Auftragungsschritt um die jeweilige Dicke der aufgetragenen Keramikschlickerschicht nach unten zu bewegen. Dadurch wird der Formkörper sukzessive auf dem Auftragsflächenelement 22 aufgebaut. Die Ansteuerung des Stellaggregats 48 zum Verlagern des Startflächenelements 44 relativ zum Auftragsflächenelement 22 erfolgt ebenfalls durch die Steuereinheit.

## Patentansprüche

1. Vorrichtung (10) zum schichtweisen Herstellen eines Formkörpers aus einer Mehrzahl von Keramikschlickerschichten, umfassend:
eine Auftragsflächenbaugruppe (20), die ein Auftragsflächenelement (22) mit einer Auftragsfläche (24) aufweist,
eine Keramikschlickerauftragsbaugruppe (30) mit einer Keramikschlickerabgabeeinheit (34) und einer Rakeleinheit (32),
wobei die Rakeleinheit (32) in einer zur Auftragsfläche (24) im Wesentlichen parallel verlaufenden Richtung aus einer Anfangsstellung (A) in eine Endstellung (B) verlagerbar ist und wobei die Keramikschlickerabgabeeinheit (34) dazu ausgebildet ist, in Verlagerungsrichtung der Rakeleinheit (32) vor die Rakeleinheit (32) eine vorbestimmte Menge an Keramikschlicker auf die Auftragsfläche (24) aufzubringen, welche vorbestimmte Menge an Keramikschlicker zur Bildung einer Keramikschlickerschicht (26) im Zuge der Verlagerung der Rakeleinheit (32) aus der Anfangsstellung (A) in die Endstellung (B) bestimmt ist, und
wobei die Rakeleinheit (32) ferner aus der Endstellung (B) in die Anfangsstellung (A) rückführbar ist,
**dadurch gekennzeichnet, dass** die Vorrichtung (10) ferner eine Startflächenbaugruppe (40) umfasst, die ein Startflächenelement (42) mit einer Startfläche (44) aufweist,
wobei das Startflächenelement (42) und das Auftragsflächenelement (22) relativ zueinander verlagerbar sind,
wobei die Rakeleinheit (32) in ihrer Anfangsstellung (A) über der Startfläche (44) angeordnet ist, und
wobei die Keramikschlickerabgabeeinheit (34) derart ausgebildet ist, dass sie zumindest einen Teil der vorbestimmten Menge an Keramikschlicker (36) auf die Startfläche (44) aufbringt.

2. Vorrichtung (10) nach Anspruch 1,
**dadurch gekennzeichnet, dass** der Startflächenbaugruppe (40) eine Reinigungsvorrichtung (50) zum Reinigen der Startfläche (44) zugeordnet ist.

3. Vorrichtung (10) nach Anspruch 1 oder Anspruch 2,
**dadurch gekennzeichnet, dass** das Startflächenelement (42) zumindest abschnittsweise, vorzugsweise in einem die Startfläche (44) aufweisenden Abschnitt, aus einem offenporigen Material gefertigt ist, beispielsweise aus einem offenporigen Kunststoff.

4. Vorrichtung (10) nach einem der Ansprüche 1 bis 3,
**dadurch gekennzeichnet, dass** eine weitere Reinigungsvorrichtung (60) zum Reinigen der Rakeleinheit (32) vorgesehen ist.

5. Vorrichtung (10) ach einem der Ansprüche 1 bis 4,
**dadurch gekennzeichnet, dass** die Rakeleinheit (32) im Zuge der Rückführung aus der Endstellung (B) in die Anfangsstellung (A) in eine Reinigungsstellung (C) überführbar ist.

6. Vorrichtung (10) nach einem der Ansprüche 1 bis 5,
**dadurch gekennzeichnet, dass** das Startflächenelement (42) und das Auftragsflächenelement (22) derart anordenbar sind, dass die Startfläche (44) und die Auftragsfläche (24) zu Beginn der Herstellung eines Keramikkörpers auf gleicher Höhe angeordnet sind.

7. Vorrichtung (10) nach einem der Ansprüche 1 bis 6,
**dadurch gekennzeichnet, dass** ferner eine Auslaufflächenbaugruppe vorgesehen ist, die ein Auslaufflächenelement mit einer Auslauffläche (74) aufweist und auf der dem Startflächenelement abgewandten Seite des Auftragsflächenelements angeordnet ist, wobei die Rakeleinheit in ihrer Endstellung über der Auslauffläche angeordnet ist, oder/und wenigstens eine Seitenflächenbaugruppe, die ein Seitenflächenelement mit einer Seitenfläche aufweist und seitlich der Auftragsflächenbaugruppe angeordnet ist.

8. Vorrichtung (10) nach Anspruch 7,
**dadurch gekennzeichnet, dass** die Flächennormalen der Auslauffläche und der Seitenfläche zueinander und zur Flächennormale der Auftragsfläche im Wesentlichen parallel verlaufen, und dass das Auslaufflächenelement oder/und das Seitenflächenelement derart anordenbar sind, dass die Auslauffläche oder/und die Seitenfläche zu Beginn der Herstellung eines Keramikkörpers mit der Auftragsfläche und der Startfläche auf gleicher Höhe angeordnet sind.

9. Vorrichtung (10) nach Anspruch 8,
**dadurch gekennzeichnet, dass** das Auslaufflächenelement und das Seitenflächenelement relativ zum Auftragsflächenelement verlagerbar sind.

10. Vorrichtung (10) nach Anspruch 9,
**dadurch gekennzeichnet, dass** das Auslaufflächenelement und das Seitenflächenelement gemeinsam verlagerbar sind.

11. Vorrichtung (10) nach einem der Ansprüche 7 bis 10,
**dadurch gekennzeichnet, dass** der Auslaufflächenbaugruppe oder/und der Seitenflächenbaugruppe eine Reinigungsvorrichtung zum Reinigen der Auslauffläche oder/und der Seitenfläche zugeordnet ist.

12. Vorrichtung (10) nach einem der Ansprüche 1 bis 11,
**dadurch gekennzeichnet, dass** ferner eine Lasereinheit (70) vorgesehen ist, welche dazu ausgebildet ist, vorbestimmte Bereiche einer aufgetragenen Keramikschlickerschicht (26) mittels von ihr abgegebener Laserstrahlung (72) zu sintern.

13. Vorrichtung (10) nach einem der Ansprüche 1 bis 12,
**dadurch gekennzeichnet, dass** eine Trocknungsvorrichtung zum Trocknen einer aufgetragenen Keramikschlickerschicht (26) vorgesehen ist.

14. Vorrichtung (10) nach Anspruch 13,
**dadurch gekennzeichnet, dass** ferner eine Steuereinheit zur Steuerung des Betriebs der Auftragsflächenbaugruppe (20) oder/und der Startflächenbaugruppe (40) oder/und der Auslaufflächenbaugruppe oder/und der Seitenflächenbaugruppe oder/und der Keramikschlickerauftragsbaugruppe (30) oder/und der Reinigungsvorrichtung (50) oder/und der weiteren Reinigungsvorrichtung (60) oder/und der Lasereinheit (70) oder/und der Trocknungsvorrichtung vorgesehen ist.

15. Vorrichtung (10) nach ein Anspruch 14,
**dadurch gekennzeichnet, dass** die Steuereinheit die Auftragsflächenbaugruppe (20) derart steuert, dass das Auftragsflächenelement (22) um die Höhe der aufgetragenen Keramikschlickerschicht (26) absenkbar ist.

16. Startflächebaugruppe (40) mit wenigstens einem der Startflächenbaugruppenmerkmale nach den Ansprüche 1 bis 15.
